# EUROPEAN PATENT SPECIFICATION

(11) **EP 3 046 502 B1**
(45) Date of publication and mention of the grant of the patent: **18.11.2020**
(21) Application number: 14845595.9
(22) Date of filing: 19.09.2014
(51) Int. Cl.: A61C 7/14, A61C 7/00

(54) **BRACKET SYSTEM**
HALTERUNGSSYSTEM
SYSTÈME DE BOÎTIER

(30) Priority: 20.09.2013 US 201361880322 P
(43) Date of publication of application: 27.07.2016
(73) Proprietor: Owen, Brandon, Fort Collins, CO 80525 (US)
(72) Inventor: Owen, Brandon, Fort Collins, CO 80525 (US)
(74) Representative: Kador & Partner PartG mbB
(86) International application number: PCT/US2014/056679
(87) International publication number: WO 2015/042481

(56) References cited:
- WO-A1-2012/116877
- US-A- 4 948 366
- US-A- 5 248 257
- US-A- 5 464 347
- US-A1- 2005 244 774
- US-A1- 2007 259 300

## Description

### I. TECHNICAL FIELD

A bracket system for orthodontic appliances including a bracket combinatorial library having a plurality of brackets each interchangeably fixedly mountable to each of a plurality of teeth within a dentition group in a dental arch, whereby the plurality of brackets can be configured to provide incremental variation in tipping force moments, in-out force moments, and torqueing force moments over the entire useful range of orthodontic mechanics, allowing an orthodontic practitioner to prescribe a combination of tipping force moments, in-out force moments, and torqueing force moments unique for each tooth in relation to the plurality of teeth of a patient.

### II. BACKGROUND

Orthodontic treatment applied to straighten or align teeth of a patient dates back hundreds of years. Generally, orthodontic treatment includes the use of wires wrapped around the teeth of a patient. Around the mid-19705, chiefly due to improvements in adhesive technology, the preferred method shifted to bonding brackets directly onto the teeth of the patient and running elastic archwires of rectangular cross-sectional shape through archwire slots disposed within the brackets.

Typically, manual selection of orthodontic appliance components may be made by an orthodontic practitioner from available inventories of standard or otherwise pre-manufactured components, which the orthodontic practitioner assembles to form the orthodontic appliance to treat the patient. In most cases, the appliance components, such as the brackets, may be adapted to a certain tooth, for instance an upper canine, but not to the individual tooth of the specific patient. Adaptation of the bracket to the individual tooth of the specific patient may commonly be performed by filling the gap between the individual tooth surface and the bracket surface with adhesive to thereby bond the bracket to the individual tooth such that the archwire slot orients in a horizontal plane when the teeth move to a targeted position, whereby the driving force for moving the teeth to the targeted position is provided by the archwire disposed within the archwire slots.

As stated above, conventional brackets may typically be designed and manufactured based upon average anatomy. Consequently, orthodontic practitioners select what they perceive to be the brackets and archwires having a relatively similar design to that required to treat a particular patient, then modify the design to treat the particular patient. Some modifications may be performed when the orthodontic appliance is initially installed, but almost inevitably, modification is required during the course of treatment of the patient. These subsequent modifications may take the form of replacement of brackets, but most commonly take the form of periodic bending and reshaping of the archwire as the treatment progresses. Thus, the treatment of the patient has become a manual feedback system in which the orthodontic practitioners monitors the progress of the treatment and then readjusts the orthodontic appliance to correct the forces being applied to the teeth to bring the teeth to targeted positions. As a result, the patient may be subjected to treatment over a period of time which may be greater than would be necessary if the orthodontic appliance were initially optimally designed. In addition, the time required of the orthodontic practitioner for implementation of the treatment may be several times greater than if modification of the orthodontic appliance was not needed. Hence, the orthodontic practitioner may be restricted to treating fewer patients and the cost of the treatment to the patient and/or to the orthodontist may be increased.

Systems and methods for providing custom orthodontic appliances are gaining acceptance. Typically, these systems and methods take into account individual patient anatomy and design and manufacture custom appliances on a case-by-case basis. Often, custom appliance designs are based on calculated ideal occlusions or treatment plans by or with the aid of computers or computer programs, whereby tooth setups or post-treatment tooth positions may be determined based on digital data of the tooth shapes and other dental anatomy of the individual patient. The resulting custom appliances, when properly designed and manufactured, can be fitted to the teeth of a patient by an orthodontic practitioner, usually using custom jigs or other positioning devices or techniques that may be provided with the custom appliances to insure placement at predetermined positions on the teeth so that the orthodontic appliance functions as it was designed to. Properly installed, such a custom appliances can move the teeth of a patient in less time and with a minimum of post-installation manipulation by the orthodontic practitioner.

However, custom orthodontic appliances may not always be available or may not always be desired, for example because the design and manufacturing can be relatively expensive and time-consuming.

Accordingly, a need exists for a system and method which can improve the selection and customization of standard or otherwise pre-manufactured orthodontic appliance components to achieve the entire useful range of orthodontic mechanics in a cost-effective and timely fashion.

Document WO 2012/116877 A1 discloses a method for producing a patient-specific bracket body (7) for a modular bracket (1) with a support (3) and with a bracket body (7), which method comprises the steps of: a) making available a raw bracket body (9) with a spacer section (9d), b) establishing a first parameter for cutting through the spacer section (9d), a distance of a resulting cut surface of the spacer section (9d) from the slit (11), in order to establish a suitable height of the bracket body (7), c) establishing a second parameter for cutting through the spacer section (9d), a cutting angle to a mesio-distal axis, in order to establish a suitable torque value of the bracket body (7), d) establishing a third parameter for cutting through the spacer section (9d), a cutting angle to an occlusal-gingival axis, in order to establish a suitable rotation value of the bracket body (7), e) cutting through the spacer section (9d) according to the three established parameters, as a result of which a bracket body (7) is produced.

### III. DISCLOSURE OF THE INVENTION

The invention is defined by the appended independent claims. Preferred embodiments are defined in the dependent claims.

A broad object of a particular embodiment of the invention can be to provide a bracket system for orthodontic appliances including a bracket combinatorial library having a plurality of brackets each interchangeably fixedly mountable to each of a plurality of teeth within a dentition group in a dental arch, whereby the plurality of brackets can be configured to provide incremental variation in tipping force moments, in-out force moments, and torqueing force moments over the entire useful range of orthodontic mechanics.

Another broad object of a particular embodiment of the invention can be to provide a method of producing a bracket system by providing a bracket combinatorial library having a plurality of brackets each interchangeably fixedly mountable to each of a plurality of teeth within a dentition group in a dental arch, whereby the plurality of brackets can be configured to provide incremental variation in tipping force moments, in-out force moments, and torqueing force moments over the entire useful range of orthodontic mechanics.

Another broad object of a particular embodiment of the invention can be to provide a method of using a bracket system having a bracket combinatorial library by prescribing a unique combination of brackets from the bracket combinatorial library, each bracket within the bracket combinatorial library interchangeably fixedly mountable to each of a plurality of teeth within a dentition group in a dental arch; and fixedly mounting each bracket from the prescribed unique combination of brackets to each corresponding tooth of the plurality of teeth within the dentition group in the dental arch. The plurality of brackets can be configured to provide incremental variation in tipping force moments, in-out force moments, and torqueing force moments over the entire useful range of orthodontic mechanics.

Naturally, further objects of the invention are disclosed throughout other areas of the specification, drawings, and claims.

### IV. BRIEF DESCRIPTION OF THE DRAWINGS

Figure 1 is an illustration of an orthodontic appliance utilizing a particular embodiment of the inventive bracket system.
Figure 2A is an illustration of a facial orthodontic appliance utilizing a particular embodiment of the inventive bracket system.
Figure 2B is an illustration of a lingual orthodontic appliance utilizing a particular embodiment of the inventive bracket system.
Figure 3 is an illustration of a bracket combinatorial library having various combinations of bracket body lengths, archwire slot angles, and bracket base rotation configurations in a particular embodiment of the inventive bracket system.
Figure 4A is an illustration of a particular embodiment of a bracket of the inventive bracket system, whereby an archwire is disposed within an archwire slot of the bracket.
Figure 4B is an illustration of a bracket base mounting surface having bond enhancement elements.
Figure 5A is an illustration of tip misalignment of the teeth associated with mesial-distal inclination.
Figure 5B is an illustration of the inventive bracket system fixed to respective surfaces of the teeth shown in Figure 5A to correct tip misalignment of the teeth associated with mesial-distal inclination.
Figure 5C is an illustration of the correction of tip misalignment of the teeth associated with mesial-distal inclination shown in Figure 5B following treatment with the inventive bracket system.
Figure 6A is and illustration of in-out misalignment of the teeth in relation to the dental arch midline.
Figure 6B is an illustration of the inventive bracket system fixed to respective surfaces of the teeth shown in Figure 6A to correct in-out misalignment of the teeth in relation to the dental arch midline.
Figure 6C is an illustration of the correction of in-out misalignment of the teeth in relation to the dental arch midline shown in Figure 6C following treatment with the inventive bracket system.
Figure 7A is an illustration of torque misalignment of the teeth associated with facial-lingual inclination.
Figure 7B is an illustration of the inventive bracket system fixed to respective surfaces of the teeth shown in Figure 7A to correct torque misalignment of the teeth associated with facial-lingual inclination.
Figure 7C is an illustration of the correction of torque misalignment of the teeth associated with facial-lingual inclination shown in Figure 7B following treatment with the inventive bracket system.
Figure 7D is an illustration of bracket configuration having an archwire slot angled in relation to a bracket body longitudinal axis, the resulting archwire slot angle configured to generate archwire twisting, whether clockwise twisting or counterclockwise twisting, for the correction of torque misalignment of the teeth associated with facial-lingual inclination.
Figure 7E is an illustration of bracket configuration having a bracket body longitudinal axis angled in relation to a bracket base, the resulting archwire slot angle configured to generate archwire twisting, whether clockwise twisting or counterclockwise twisting, for the correction of torque misalignment of the teeth associated with facial-lingual inclination.
Figure 8 is an illustration of the inventive bracket system including an elastic ligature and a movable latch element, both adapted to retain the archwire within the archwire slot.

### V. MODE(S) FOR CARRYING OUT THE INVENTION

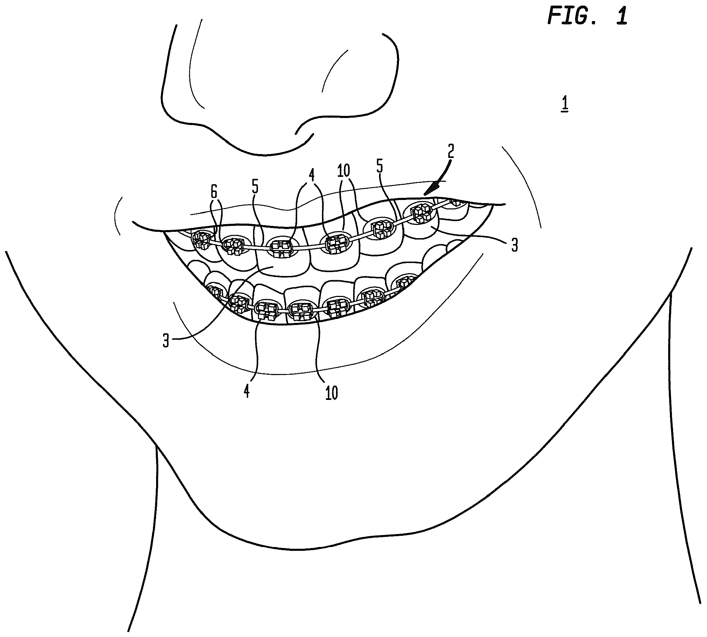

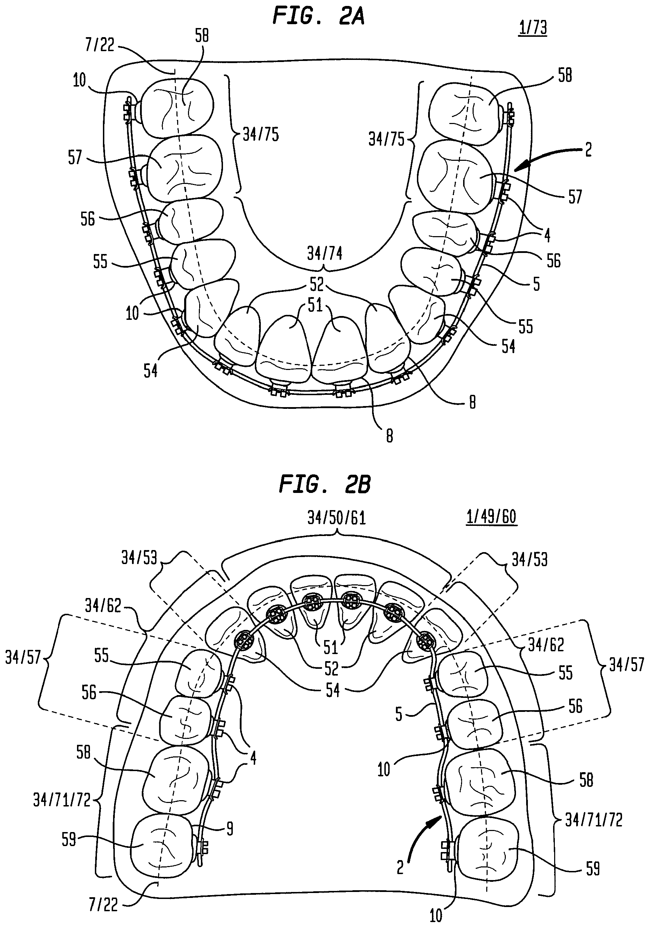

Now referring primarily to Figure 1, Figure 2A, and Figure 2B, embodiments of the inventive bracket system (1) can be utilized for orthodontic treatment performed by fixing an orthodontic appliance (2) to a plurality of teeth (3). Typically, an orthodontic appliance (2) includes three basic elements: a plurality of brackets (4), an archwire (5), and a ligature (6). Each of the plurality of brackets (4) can be adhered to a tooth surface (8)(9) and intercoupled by the archwire (5), whereby the ligature (6) can be used to retain the archwire (5) in association with the plurality of brackets (4). The archwire (5) can generate external forces to urge the teeth (3) toward a targeted position or orientation over a period of time. Accordingly, the orthodontic appliance (2) can be utilized to correct malocclused teeth (3).

Now referring primarily to Figure 2A, as to particular embodiments, the inventive bracket system (I) can include a plurality of brackets (4) which adhere to the facial surfaces (8) of respective teeth (3) around a dental arch (7), whereby the archwire (5) intercoupling the plurality of brackets (4) extends around the facial surfaces (9) of the teeth (3).

Now referring primarily to Figure 2B, as to particular embodiments, the inventive bracket system (1) can include a plurality of brackets (4) which adhere to the lingual surfaces (9) of respective teeth (3) around the dental arch (7), whereby the archwire (5) intercoupling the plurality of brackets (4) extends around the lingual surfaces (9) of the teeth (3).

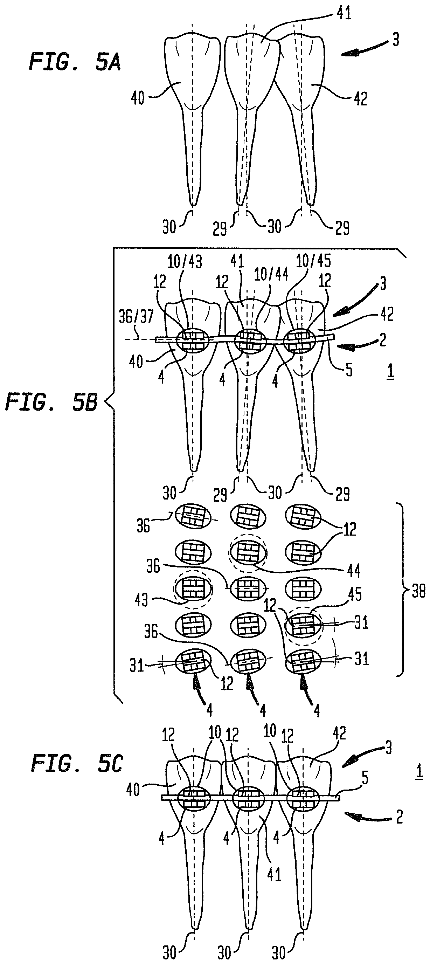

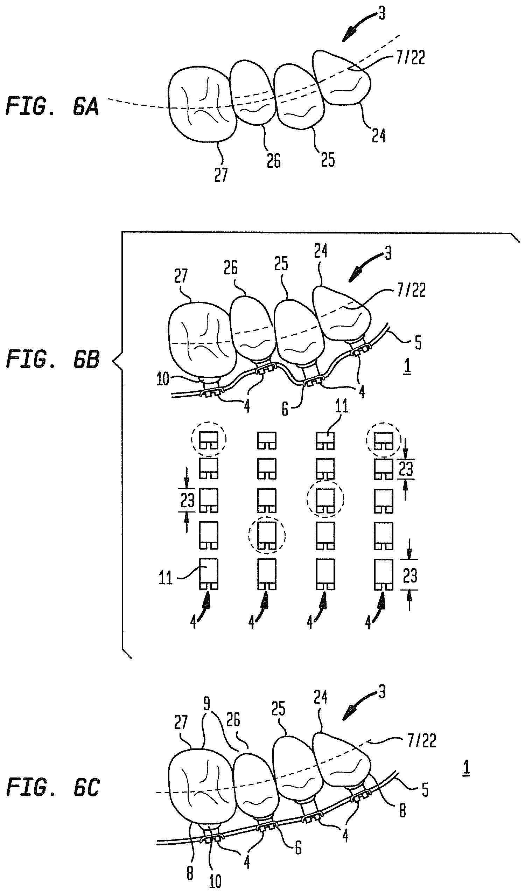

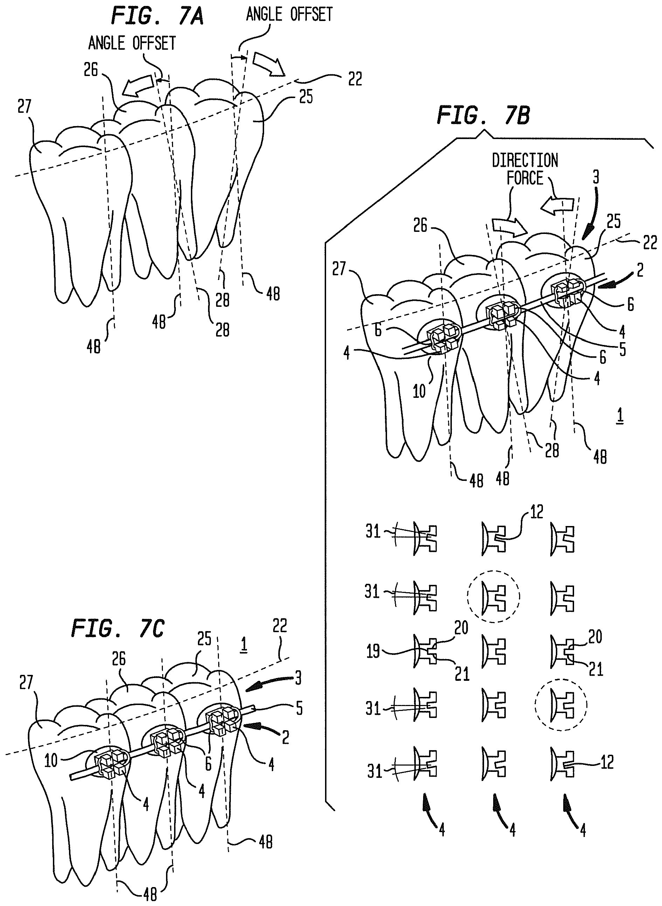

Now referring primarily to Figure 5A, Figure 6A, and Figure 7A, embodiments of the inventive bracket system (1) can be utilized to correctly align a plurality of teeth (3), which can be malocclused or misaligned in relation to one or more of: mesial-distal inclination (29) (also referred to as "tip") (as shown in the example of Figure 5A); a dental arch midline (22), whether facial or lingual misalignment (also referred to as "in-out") (as shown in the example of Figure 6A), or facial-lingual root inclination (28) (also referred to as "torque") (as shown in the example of Figure 7A).

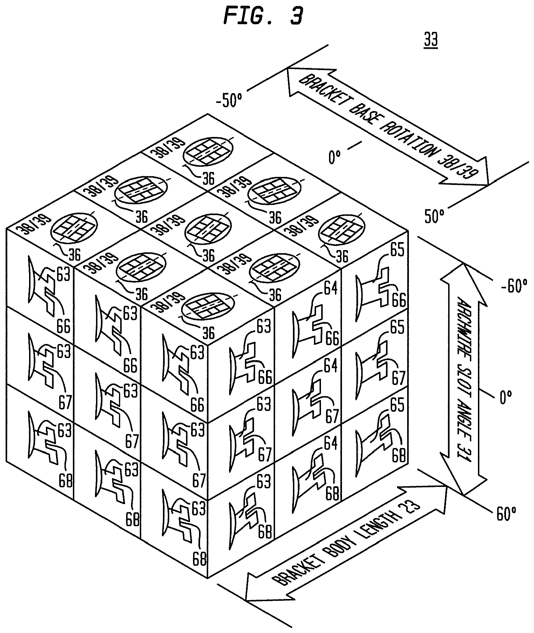

Now referring primarily to Figure 3 through Figure 4B, the inventive bracket system (1) includes a bracket combinatorial library (33) having a plurality of brackets (4) each interchangeably fixedly mountable to each of a plurality of teeth (3) within a dentition group (34) in a dental arch (7). Each of the plurality of brackets (4) within the bracket combinatorial library (33) includes a bracket base (10), a bracket body (11), and an archwire slot (12).

The term "bracket combinatorial library" for the purposes of this invention means a plurality of brackets (4) having various combinations and permutations of bracket base rotation configurations (39), bracket body lengths (23), and archwire slot angles (31) over a maximum range of action for orthodontic mechanics to correspondingly provide a graded series of prescribable tipping force moments, in-out force moments, and torqueing force moments which can be customized for a respective tooth (3).

The bracket base (10) has one configuration fixedly mountable to each one of the plurality of teeth (3) within the dentition group (34), whereby a bracket base mounting surface (35) is adapted for directly bonding to the surfaces (8)(9) of respective teeth (3). As to particular embodiments, the bracket base mounting surface (35) can be configured to conform to a facial mountable tooth surface (8), a lingual mountable tooth surface (9), or both, of each one of the plurality of teeth (3) within the dentition group (34).

As to particular embodiments belonging to the invention, the bracket base mounting surface (35) is configured as an arcuate bracket base mounting surface (35), having a concave or convex contour configured to conform to a corresponding convex or concave contour of a mountable tooth surface (8)(9) of each one of the plurality of teeth (3) within the dentition group (34).

Now referring primarily to Figure 5A through Figure 5C, the bracket base (10) can have a configuration rotatable in relation to a zero degree mesial-distal inclination axis (30) of a tooth (3) prior to being fixedly mounted to one of the plurality of teeth (3) within the dentition group (34). The bracket base (10) coupled to the bracket body (11) having an archwire slot (12) extending across a bracket body second end (18) can be rotated to dispose an archwire slot longitudinal axis (36) in a generally mesial-distal orientation, whereby the archwire slot (12) having the archwire slot longitudinal axis (3 6) in substantially perpendicular relation to the zero degree mesial-distal inclination axis (30) of the tooth (3) defines a zero degree archwire slot rotation axis (37). Tipping force moments can be generated by rotating the bracket base (10) and corresponding archwire slot (12) in either a clockwise or a counterclockwise direction from the zero degree archwire slot rotation axis (37) to provide a corrective archwire slot rotation configuration (38) (as shown in the example of Figure 5B). The amount of rotation of the bracket base (10) and corresponding archwire slot (12) can be within the maximum range of action for orthodontic mechanics relating to correction of mesial-distal inclination (29) of one or more teeth (3). As an illustrative example, the bracket base (10) can have a configuration rotatable throughout a range of between about -50 degrees to about 50 degrees in relation to the zero degree archwire slot rotation axis (37), whereby an archwire slot rotation configuration (38) of -50 degrees, achieved by counterclockwise rotation from the zero degree archwire slot rotation axis (37), orients the corresponding archwire slot longitudinal axis (36) at about -50 degrees from the zero degree archwire slot rotation axis (3 7) and an archwire slot rotation configuration (38) of 50 degrees, achieved by clockwise rotation from the zero degree archwire slot rotation axis (37), orients the corresponding archwire slot longitudinal axis (36) at about 50 degrees from the zero degree archwire slot rotation axis (37). An archwire (5) can then be disposed within the archwire slot (12) to generate sufficient tipping force moments to correct mesial-distal inclination (29) of one or more teeth (3). The various bracket base rotation configurations (39) and corresponding archwire slot rotation configurations (38) can provide incrementally varying tipping force moments, whereby a greater a archwire slot rotation configuration (38) can generate greater tipping force moments in relation to a lesser archwire slot rotation configuration (3 8), which can generate lesser tipping force moments.

As shown in the illustrative example of Figure 5A, a plurality of teeth (3) can be misaligned in relation to mesial-distal inclination (29), whereby a first tooth (40) can have substantially zero mesial-distal inclination (29), a second tooth (41) can have a distal-axial inclination (29) of 5 degrees from the zero degree mesial-distal inclination axis (30), and a third tooth (42) can have a mesial-axial inclination (29) of -5 degrees from the zero degree mesial-distal inclination axis (30). As shown in Figure 5B, to correct this misalignment, bracket base rotation configurations (39) of the plurality of brackets (4) fixedly mounted to the corresponding plurality of teeth (3) can be prescribed (prescription shown in broken circle for each of the plurality of teeth (3)) such that sufficient tipping force moments can be generated by an archwire (S) disposed within the archwire slot (12) to move the plurality of teeth (3) toward the zero degree mesial-distal inclination axis (30).

As shown in Figure 5B, to correct the mesial-distal inclination (29) of the second and third teeth (41)(42), a first bracket base (43) can be rotated and fixedly mounted to the first tooth (40) to orient the archwire slot longitudinal axis (36) of the corresponding archwire slot (12) in substantially parallel relation to the zero degree archwire slot rotation axis (37), which is in substantially perpendicular relation to the zero degree mesial-distal inclination axis (30) of the first tooth (40). A second bracket base (44), having a configuration which is similar to the first bracket base (43), can be rotated clockwise and fixedly mounted to the second tooth (41) to orient the archwire slot longitudinal axis (36) of the corresponding archwire slot (12) about 5 degrees from the zero degree archwire slot rotation axis (37). A third bracket base (45), having a configuration which is similar to the first and second bracket bases (43)(44), can be rotated counterclockwise and fixedly mounted to the third tooth (42) to orient the archwire slot longitudinal axis (36) of the corresponding archwire slot (12) about 5 degrees from the zero degree archwire slot rotation axis (3 7). An archwire (S) can then be disposed within each of the archwire slots (12) to generate sufficient tipping force moments to reduce the distal-axial inclination (29) of the second tooth (41) and the mesial-axial inclination (29) of the third tooth (42) toward zero degrees of mesial-distal inclination corresponding to the zero degree mesial-distal inclination axis (30) and provide a targeted alignment of the plurality of teeth (3) (as shown in the example of Figure 5C). Accordingly, one rotatable bracket base configuration can be used to correct mesial-distal inclination (29) of a plurality of teeth (3) by rotating each bracket base (10) to achieve corresponding targeted archwire slot longitudinal axis (36) orientations configured to correct mesial-distal inclination of each tooth (3) within the plurality of teeth (3).

As to particular embodiments, the bracket base (10) can be provided with bond enhancement elements (13) to increase strength of the bond between the bracket base (10) and the respective tooth surfaces (8)(9). Bond enhancement elements (13) can include chemical bond enhancements, mechanical bond enhancements, or a combination thereof. For example, suitable chemical bond enhancements can include silane treatment such as described in United States Patent No. 4,948,366. Suitable mechanical bond enhancements can include ridges, pegs, grooves, particles (such as regularly-shaped particles including spheres, rods, or cones, or irregularly-shaped particles such as shards of ceramic material).

Now referring primarily to Figure 6A through Figure 6C, the bracket (4) further includes a bracket body (11) having a bracket body length (23) disposed between a bracket body first end (17) and a bracket body second end (18), whereby the bracket body first end (17) couples to the bracket base (10) and the bracket body second end (18) outwardly extends from the bracket base (10). The plurality of brackets (4) within the bracket combinatorial library (33) has a plurality of preselected bracket body lengths (23) discretely occurring throughout a bracket body length range, typically between zero millimeters to about 5 millimeters. As to particular embodiments, the preselected body bracket lengths (23) discretely occurring throughout the bracket body length range of between zero millimeters to about 5 millimeters can occur at intervals selected from the group including or consisting of: between about 0.25 millimeters to about 0.5 millimeters, between about 0.375 millimeters to about 0.875 millimeters, between about 0.5 millimeters to about 1.0 millimeter, and between about 0.75 millimeters to about 1.25 millimeters, whereby a lesser interval provides a greater number of brackets (4) within the bracket combinatorial library (33) to span the bracket body length range in relation to a greater interval, which provides a lesser number of brackets (4) within the bracket combinatorial library (33) to span the bracket body length range.

Again referring primarily to Figure 6A through Figure 6C, when a plurality of brackets (4) are fixedly mounted to a corresponding plurality of teeth (3), the bracket body length (23) can generate in-out force moments, which can urge the teeth (3) to move toward a targeted alignment with a dental arch midline (22). By altering the bracket body length (23), the distance between the facial or lingual surfaces (8)(9) of the respective teeth (3) and an archwire slot base (19) can be correspondingly altered to sufficiently tension an archwire (5) disposed within the archwire slot (12) to move the respective teeth (3) toward the dental arch midline (22), whether "in" or "out".

Now referring to primarily to Figure 3 and Figure 6B, the inventive bracket system (1) can provide a graded series of bracket body lengths (23) within a plurality of brackets (4) over a maximum range of action for orthodontic mechanics relating to in-out force moments for alignment of teeth (3) in relation to the dental arch midline (22). Accordingly, an orthodontic practitioner can prescribe and fit a bracket body length (23) (prescription shown in broken circle for each of the plurality of teeth (3)) from the graded series of bracket body lengths (23) within the plurality of brackets (4) of the bracket combinatorial library (33), whereby each bracket body length (23) is unique to the in-out force moments required for alignment of each corresponding one of the plurality of teeth (3) toward the dental arch midline (22). The graded series of bracket body lengths (23) can provide incrementally varying in-out force moments, whereby a greater bracket body length (23) can generate greater in-out force moments in relation to a lesser bracket body length (23), which can generate lesser in-out force moments.

Now referring primarily to Figure 6A through Figure 6C, as an illustrative example, a plurality of teeth (3), including a left maxillary cuspid (24), a left maxillary first bicuspid (25), a left maxillary second bicuspid (26), and left maxillary first molar (27), can be misaligned in relation to the dental arch midline (22). As shown in Figure 6B, to correct this misalignment, the bracket body lengths (23) of the plurality of brackets (4) fixedly mounted to the corresponding plurality of teeth (3) can be prescribed (prescription shown in broken circle for each of the plurality of teeth (3)) such that sufficient in-out force moments can be generated by an archwire (5) disposed within the archwire slot (12) to move the plurality of teeth (3) toward the dental arch midline (22).

As shown in Figure 6B, to correct the misalignment of the left maxillary first bicuspid (25) and the left maxillary second bicuspid (26) in relation to the dental arch midline (22), a greater bracket base length (23) can be prescribed for the left maxillary first bicuspid (25) to move the left maxillary first bicuspid (25) toward the dental arch midline (22) and a lesser bracket base length (23) can be prescribed for the left maxillary second bicuspid (26) to move the left maxillary second bicuspid (26) toward the dental arch midline (22).

Now referring primarily to Figure 7A through Figure 7B, the bracket (4) further includes an archwire slot (12) extending across the bracket body second end (18). The archwire slot (12) is defined by an archwire slot base (19) joined to a pair of archwire slot walls (20)(21) disposed a distance apart in substantially parallel opposed relation. The archwire slot (12) is angled in relation to the bracket base (10) to define an archwire slot angle (31), whereby the archwire slot (12) is configured to receive an archwire (5), such as an archwire (5) having a rectangular archwire cross-section.

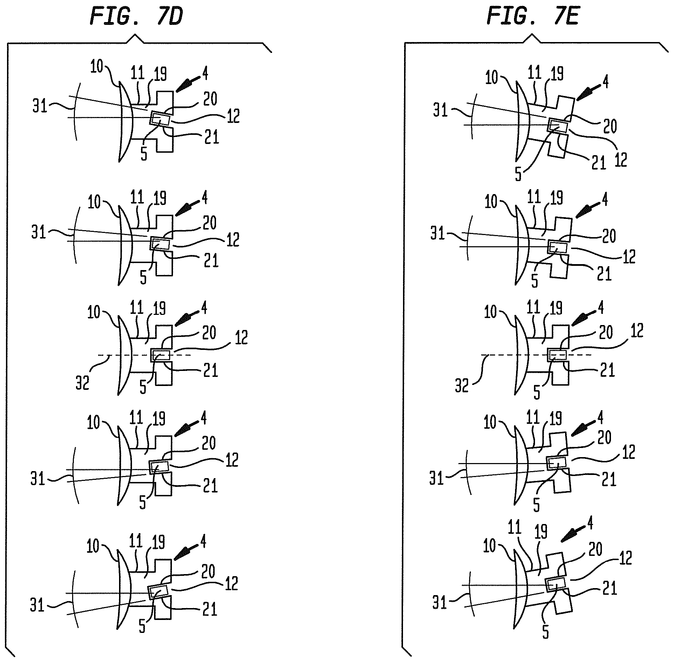

Now referring primarily to Figure 7D and Figure 7E, the archwire slot (12) can be angled in relation to the bracket base (10) to define the archwire slot angle (31) by angling the archwire slot (12) in relation to a bracket body longitudinal axis (32) (as shown in the examples of Figure 7B and Figure 7D). Alternatively, the archwire slot (12) can be angled in relation to the bracket base (10) to define the archwire slot angle (31) by angling the bracket body longitudinal axis (32) in relation to the bracket base (10) (as shown in the examples of Figure 7E).

The plurality of brackets (4) within the bracket combinatorial library (33) has a plurality of preselected archwire slot angles (31) discretely occurring throughout an archwire slot angle range, typically between 0 degrees to about 60 degrees. As to particular embodiments, the preselected archwire slot angles (31) discretely occurring throughout the archwire slot angle range of between 0 degrees to about 60 degrees can occur at intervals selected from the group including or consisting of: between about 5 degrees to about 10 degrees, between about 7.5 degrees to about 12.5 degrees, between about 10 degrees to about 15 degrees, between about 12.5 degrees to about 17.5 degrees, between about 15 degrees to about 20 degrees, and between about 17.5 degrees to about 22.5 degrees, whereby a lesser interval provides a greater number of brackets (4) within the bracket combinatorial library (33) to span the archwire slot angle range in relation to a greater interval, which provides a lesser number of brackets (4) within the bracket combinatorial library (33) to span the archwire slot angle range.

Now referring primarily to Figure 7A through Figure 7C, when a plurality of brackets (4) are fixedly mounted to a corresponding plurality of teeth (3), the archwire slot angle (31) can generate torqueing force moments, which can urge the teeth (3) to move toward a targeted alignment in relation to a zero degree facial-lingual root inclination axis (48). By altering the archwire slot angle (31), the angle between the facial or lingual surfaces (8)(9) of the respective teeth (3) and the archwire slot (12) can be correspondingly altered to sufficiently tension an archwire (5) disposed within the archwire slot (12) to move the respective teeth (3) toward the zero degree facial-lingual root inclination axis (48).

Now referring to primarily to Figure 3 and Figure 7B, the inventive bracket system (1) can provide a graded series of archwire slot angles (31) within a plurality of brackets (4) over a maximum range of action for orthodontic mechanics relating to torqueing force moments for alignment of teeth (3) in relation to the zero degree facial-lingual root inclination axis (48). Accordingly, an orthodontic practitioner can prescribe and fit an archwire slot angle (31) (prescription shown in broken circle for each of the plurality of teeth (3)) from the graded series of archwire slot angles (31) within the plurality of brackets (4) of the bracket combinatorial library (33), whereby each archwire slot angle (31) is unique to the torqueing force moments required for alignment of each corresponding one of the plurality of teeth (3) toward the zero degree facial-lingual root inclination axis (48). The graded series of archwire slot angles (31) can provide incrementally varying torqueing force moments, whereby a greater archwire slot angle (31) can generate greater torqueing force moments in relation to a lesser archwire slot angle (31), which can generate lesser torqueing force moments.

Now referring primarily to Figure 7A through Figure 7C, as an illustrative example, a plurality of teeth (3), including a left maxillary second bicuspid (26), a left maxillary first bicuspid (25), and a left maxillary first molar (27), can be misaligned in relation to the zero degree facial-lingual root inclination axis (48). As shown in Figure 7B, to correct this misalignment, the archwire slot angles (31) of the plurality of brackets (4) fixedly mounted to the corresponding plurality of teeth (3) can be prescribed (prescription shown in broken circle for each of the plurality of teeth (3)) such that sufficient torqueing force moments can be generated on an archwire (5) disposed within the archwire slot (12) to move the plurality of teeth (3) toward the zero degree facial-lingual root inclination axis (48).

As shown in Figure 7B, to correct the misalignment of the left maxillary first bicuspid (25) and the left maxillary second bicuspid (26) in relation to the zero degree facial-lingual root inclination axis (48), a lingual-directing archwire slot angle (31) can be prescribed for the left maxillary first bicuspid (25) to move the left maxillary first bicuspid (25) toward the zero degree facial-lingual root inclination axis (48) and a facial-directing archwire slot angle (31) can be prescribed for the left maxillary second bicuspid (26) to move the left maxillary second bicuspid (26) toward the zero degree facial-lingual root inclination axis (48).

Now referring primarily to Figure 2A through Figure 3, the inventive bracket system (1) can include a bracket combinatorial library (33) having a plurality of brackets (4) each interchangeably fixedly mountable to each of a plurality of teeth (3) within a dentition group (34) in a dental arch (7).

Now referring primarily to Figure 2B, as to particular embodiments, the dental arch (7) can be divided into a first dental arch configuration (49), which includes four dentition groups (34), whereby a first dental arch configuration first dentition group (50) can include central and lateral incisors (51)(52); a first dental arch configuration second dentition group (53) can include cuspids (canine teeth) (54); a first dental arch configuration third dentition group (57) can include first bicuspids (first premolars) (55) and second bicuspids (second premolars) (56); and a first dental arch configuration fourth dentition group (71) can include first and second molars (58)(59).

Now referring primarily to Figure 2B, as to other particular embodiments, the dental arch (7) can be divided into a second dental arch configuration (60), which includes three dentition groups (34), whereby a second dental arch configuration first dentition group (61) can include central and lateral incisors (51)(52); a second dental arch configuration second dentition group (62) can include cuspids (canine teeth) (54), first bicuspids (first premolars) (55), and second bicuspids (second premolars) (56); and a second dental arch configuration third dentition group (72) can include first and second molars (58)(59).

Now referring primarily to Figure 2A, as to yet other particular embodiments, the dental arch (7) can be divided into a third dental arch configuration (73), which includes two dentition groups (34), whereby a third dental arch configuration first dentition group (74) can include central and lateral incisors (51)(52), cuspids (canine teeth) (54), first bicuspids (first premolars) (55), and second bicuspids (second premolars) (56); and a third dental arch configuration second dentition group (75) can include first and second molars (58)(59).

As to still yet other particular embodiments, the dental arch (7) can be divided into a fourth dental arch configuration, which only has one dentition group (34), including central and lateral incisors (51)(52), cuspids (canine teeth) (54), first bicuspids (first premolars) (55), second bicuspids (second premolars) (56), and first and second molars (58)(59).

Now referring primarily to Figure 3, the inventive bracket system (1) can include a bracket combinatorial library (33) including a plurality of brackets (4) each interchangeably fixedly mountable to each of a plurality of teeth (3) within a dentition group (34) in a dental arch (7), whereby each of the plurality of brackets (4) within the bracket combinatorial library (33) can include (i) a bracket base (10) having one configuration fixedly mountable to each one of the plurality of teeth (3) within the dentition group (34); (ii) a bracket body (11) having a preselected bracket body length (23); and (iii) an archwire slot (12) extending across the bracket body second end (18), whereby the archwire slot (12) has a preselected archwire slot angle (31). Each one of the plurality of preselected bracket body lengths (23) discretely combines with each one of the plurality of preselected archwire slot angles (31) to provide the plurality of brackets (4) within the bracket combinatorial library (33) associated with the dentition group (34), the plurality of brackets (4) being equal to a product of a number of different preselected bracket body lengths (23) occurring throughout the bracket body length range times a number of different preselected archwire slot angles (31) occurring throughout the archwire slot angle range.

Again referring primarily to Figure 3, the bracket combinatorial library (33) can include a plurality of brackets (4) each interchangeably fixedly mountable to each of a plurality of teeth (3) within a dentition group (34) in a dental arch (7), whereby each of the plurality of brackets (4) within the bracket combinatorial library (33) can include: (i) a bracket base (10) having one configuration fixedly mountable to each one of the plurality of teeth (3) within the dentition group (34); (ii) a bracket body (11) having one of three preselected bracket body lengths (23), including a first bracket body length (63), a second bracket body length (64), and a third bracket body length (65); and an archwire slot (12) extending across the bracket body second end (18), whereby the archwire slot (12) has one of three preselected archwire slot angles (31), including a first archwire slot angle (66), a second archwire slot angle (67), and a third archwire slot angle (68). Accordingly, the bracket combinatorial library (33) can include nine discretely different bracket configurations, the plurality of brackets (4) within the bracket combinational library (33) being equal to a product of the three different preselected bracket body lengths (23) times the three different preselected archwire slot angles (31). Further, each of the nine discretely different bracket configurations can be rotated to achieve any archwire slot rotation configuration (38) in relation to the zero degree archwire slot rotation axis (37), thus allowing customization of the inventive bracket system (1) with a relatively few discretely different bracket configurations.

Accordingly, the inventive bracket system (1) can provide a bracket combinatorial library (33) including a plurality of brackets (4) having rotatable bracket bases (10) associated with the graded series of bracket body lengths (23) and the graded series of archwire slot angles (31) in various combinations and permutations over a maximum range of action for orthodontic mechanics to correspondingly provide a graded series of prescribable tipping force moments, in-out force moments, and torqueing force moments unique for each of the respective teeth (3) of the plurality of teeth (3) within the dentition group (34).

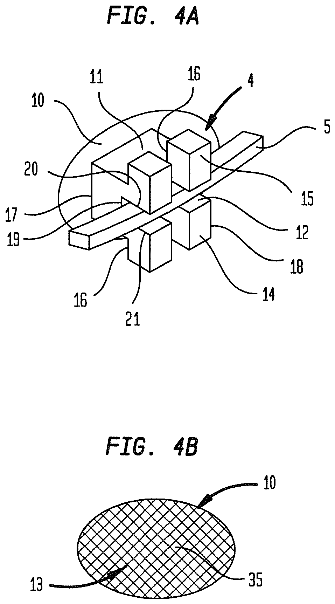

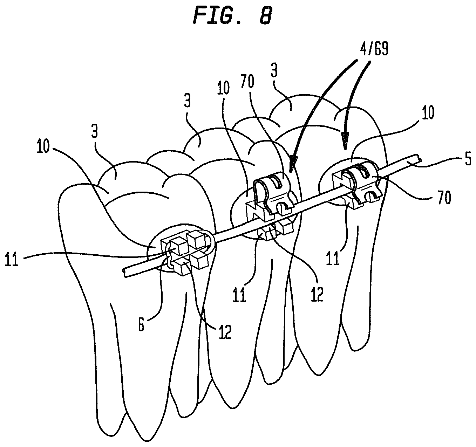

Now referring primarily to Figure 4A and Figure 8, as to particular embodiments, the inventive bracket system (1) can further include gingival tie wings (14) and occlusal tie wings (15) which project outwardly from the bracket body second end (18), whereby the gingival tie wings (14) and the occlusal tie wings (15) can be adapted to allow an elastic ligature (6) to be stretched around respective peripheral undercuts (16) to retain the archwire (5) disposed within the archwire slot (12).

Now referring primarily to Figure 8, as to other particular embodiments, the inventive bracket system (1) can further include self-ligating brackets (69), which can have a movable latch element (70) adapted to retain the archwire (5) within the archwire slot (12). As an illustrative example, the latch element (70) can include a door, a clip, a spring member, a cover, a shutter, a bail, or any other structure which can be connected to the bracket body (11) for retaining the archwire (5) within the archwire slot (12).

A method of producing an inventive bracket system (1) having a bracket combinatorial library (33) can include providing a plurality of brackets (4) each interchangeably fixedly mountable to each of a plurality of teeth (3) within a dentition group (34) in a dental arch (7). Each of the plurality of brackets (4) within the bracket combinatorial library (33) can be provided by configuring a bracket base (10) to have one configuration fixedly mountable to each one of the plurality of teeth (3) within the dentition group (34), the one configuration rotatable throughout a range of between about -50 degrees to about 50 degrees in relation to a zero degree archwire slot rotation axis (37) prior to being fixedly mounted to one of the plurality of teeth (3) within the dentition group (34); providing a bracket body (11) having a bracket body length (23) disposed between a bracket body first end (17) and a bracket body second end (18), whereby the bracket body length (23) can be a preselected bracket body length (23) discretely occurring throughout a bracket body length range of between zero millimeters to about 5 millimeters; coupling the bracket body first end (17) to the bracket base (10), the bracket body second end (18) extending outwardly from the bracket base (10); disposing an archwire slot (12) configured to receive an archwire (5) within the bracket body second end (18) to extend across the bracket body second end (18), the archwire slot (12) defined by an archwire slot base (19) joined to a pair of archwire slot walls (20)(21) disposed a distance apart in substantially parallel opposed relation, the archwire slot (12) angled in relation to the bracket base (10) to define an archwire slot angle (31), whereby the archwire slot angle (31) can be a preselected archwire slot angle (31) discretely occurring throughout an archwire slot angle range of between 0 degrees to about 60 degrees; and discretely combining each one of the plurality of preselected bracket body lengths (23) with each one of the plurality of preselected archwire slot angles (31) to provide the bracket combinatorial library (33), whereby the plurality of brackets (4) within the bracket combinatorial library (33) associated with the dentition group (34) being equal to a product of a number of different preselected bracket body lengths (23) occurring throughout the bracket body length range times a number of different preselected archwire slot angles (31) occurring throughout the archwire slot angle range.

As to particular embodiments of the method of producing an inventive bracket system (1) having a bracket combinatorial library (33), the preselected body bracket lengths (23) discretely occurring throughout the bracket body length range of between zero millimeters to about 5 millimeters can occur at intervals selected from the group including or consisting of: between about 0.25 millimeters to about 0.5 millimeters, between about 0.375 millimeters to about 0.875 millimeters, between about 0.5 millimeters to about 1.0 millimeter, and between about 0.75 millimeters to about 1.25 millimeters.

As to particular embodiments of the method of producing an inventive bracket system (1) having a bracket combinatorial library (33), the preselected archwire slot angles discretely occurring throughout the archwire slot angle range of between O degrees to about 50 degrees can occur at intervals selected from the group including or consisting of: between about 5 degrees to about 10 degrees, between about 7.5 degrees to about 12.5 degrees, between about 10 degrees to about 15 degrees, between about 12.5 degrees to about 17.5 degrees, between about 15 degrees to about 20 degrees, and between about 17.5 degrees to about 22.5 degrees.

As to particular embodiments of the method of producing an inventive bracket system (1) having a bracket combinatorial library (33), the dental arch (7) can be divided into a dental arch configuration having four dentition groups (34), whereby a first dental arch configuration first dentition group (50) can include central and lateral incisors (51)(52); a first dental arch configuration second dentition group (53) can include cuspids (canine teeth) (54); a first dental arch configuration third dentition group (57) can include first bicuspids (first premolars) (55) and second bicuspids (second premolars) (56); and a first dental arch configuration fourth dentition group (71) can include first and second molars (58)(59).

As to other particular embodiments of the method of producing an inventive bracket system (1) having a bracket combinatorial library (33), the dental arch (7) can be divided into a dental arch configuration having three dentition groups (34), whereby a second dental arch configuration first dentition group (61) can include central and lateral incisors (51)(52); a second dental arch configuration second dentition group (62) can include cuspids (canine teeth) (54), first bicuspids (first premolars) (5 5), and second bicuspids (second premolars) (56); and a second dental arch configuration third dentition group (72) can include first and second molars (58)(59).

As to yet other particular embodiments of the method of producing an inventive bracket system (1) having a bracket combinatorial library (33), the dental arch (7) can be divided into a dental arch configuration having two dentition groups (34), whereby a third dental arch configuration first dentition group (74) can include central and lateral incisors (51)(52), cuspids (canine teeth) (54), first bicuspids (first premolars) (55), and second bicuspids (second premolars) (56); and a third dental arch configuration second dentition group (75) can include first and second molars (58)(59).

As to still yet other particular embodiments of the method of producing an inventive bracket system (1) having a bracket combinatorial library (33), the dental arch (7) can be divided into a fourth dental arch configuration, which only has one dentition group (34), including central and lateral incisors (51)(52), cuspids (canine teeth) (54), first bicuspids (first premolars) (55), second bicuspids (second premolars) (56), and first and second molars (58)(59).

As to particular embodiments, the method of producing an inventive bracket system (1) having a bracket combinatorial library (33) can further include providing the archwire (5) disposable in the archwire slot (12), whereby the archwire (5) can be configured to engage the archwire slot (12) in a fixed configuration to generate increasing tipping force moments with an increase in archwire slot rotation in relation to the zero degree archwire slot rotation axis. Subsequently, the tipping force moments can generate movement of at least one of the plurality of teeth (3) toward a zero degree mesial-distal inclination axis (30).

As to particular embodiments, the method of producing an inventive bracket system (1) having a bracket combinatorial library (33) can further include providing the archwire (5) disposable in the archwire slot (12), whereby the archwire (5) can be configured to engage the archwire slot (12) in a fixed configuration to generate increasing in-out force moments with an increase in bracket body length (23). Subsequently, the in-out force moments can generate movement of at least one of the plurality of teeth (3) toward a targeted alignment in relation to a dental arch midline (22).

As to particular embodiments, the method of producing an inventive bracket system (1) having a bracket combinatorial library (33) can further include providing the archwire (5) disposable in the archwire slot (12), whereby the archwire (5) can be configured to engage the archwire slot (12) in a fixed configuration to generate increasing torquing force moments with an increase in archwire slot angle. Subsequently, the torquing force moments can generate movement of at least one of the plurality of teeth (3) toward a zero degree facial-lingual root inclination axis (48).

As to particular embodiments, the method of producing an inventive bracket system (1) having a bracket combinatorial library (33) can further include providing gingival tie wings (14) and occlusal tie wings (15) which project outwardly from the bracket body second end (18), whereby the gingival tie wings (14) and the occlusal tie wings (15) can be adapted to allow an elastic ligature (6) to be stretched around respective peripheral undercuts (16) to retain the archwire (5) disposed within the archwire slot (12).

As to particular embodiments, the method of producing an inventive bracket system (1) having a bracket combinatorial library (33) can further include movably coupling a latch element (70) to the archwire slot (12) proximate the bracket body second end (18), whereby the latch element (70) can be adapted to retain the archwire (5) disposed within the archwire slot (12).

As can be easily understood from the foregoing, the basic concepts of the present invention may be embodied in a variety of ways. The invention involves numerous and varied embodiments of a bracket system and methods for making and using such bracket systems, including the best mode.

As such, the particular embodiments or elements of the invention disclosed by the description or shown in the figures or tables accompanying this application are not intended to be limiting, but rather exemplary of the numerous and varied embodiments generically encompassed by the invention or equivalents encompassed with respect to any particular element thereof. In addition, the specific description of a single embodiment or element of the invention may not explicitly describe all embodiments or elements possible; many alternatives are implicitly disclosed by the description and figures.

It should be understood that each element of an apparatus or each step of a method may be described by an apparatus term or method term. Such terms can be substituted where desired to make explicit the implicitly broad coverage to which this invention is entitled. As but one example, it should be understood that all steps of a method may be disclosed as an action, a means for taking that action, or as an element which causes that action. Similarly, each element of an apparatus may be disclosed as the physical element or the action which that physical element facilitates. As but one example, the disclosure of a "torque" should be understood to encompass there effectively disclosure of the act of "torqueing", -- whether explicitly discussed or not -- and, conversely, were there effectively disclosure of the act of "torqueing", such a disclosure should be understood to encompass disclosure of a "torque" and even a "means for torqueing." Such alternative terms for each element or step are to be understood to be explicitly included in the description.

In addition, as to each term used it should be understood that unless its utilization in this application is inconsistent with such interpretation, common dictionary definitions should be understood to be included in the description for each term as contained in the Random House Webster's Unabridged Dictionary, second edition.

All numeric values herein are assumed to be modified by the term "about", whether or not explicitly indicated. For the purposes of the present invention, ranges may be expressed as from "about" one particular value to "about" another particular value. When such a range is expressed, another embodiment includes from the one particular value to the other particular value. The recitation of numerical ranges by endpoints includes all the numeric values subsumed within that range. A numerical range of one to five includes for example the numeric values 1, 1.5, 2, 2.75, 3, 3.80, 4, 5, and so forth. It will be further understood that the endpoints of each of the ranges are significant both in relation to the other endpoint, and independently of the other endpoint. When a value is expressed as an approximation by use of the antecedent "about," it will be understood that the particular value forms another embodiment. The term "about" generally refers to a range of numeric values that one of skill in the art would consider equivalent to the recited numeric value or having the same function or result. Similarly, the antecedent "substantially" means largely, but not wholly, the same form, manner or degree and the particular element will have a range of configurations as a person of ordinary skill in the art would consider as having the same function or result. When a particular element is expressed as an approximation by use of the antecedent "substantially," it will be understood that the particular element forms another embodiment.

Moreover, for the purposes of the present invention, the term "a" or "an" entity refers to one or more of that entity unless otherwise limited. As such, the terms "a" or "an" "one or more" 3 and "at least one" can be used interchangeably herein.

## Claims

1. A bracket system (1) comprising:
a bracket combinatorial library (33) including a plurality of brackets (4) each interchangeably fixedly mountable to each of a plurality of teeth (3) within a dentition group (34) in a dental arch (7), each of said plurality of brackets within said bracket combinatorial library including:
a bracket base (10) having one configuration fixedly mountable to each one of said plurality of teeth (3) within said dentition group (34); said bracket base (10) having a bracket base mounting surface (35) adapted for directly bonding to the surfaces (8)(9) of respective said teeth (3);
a bracket body (11) having a bracket body length (23) disposed between a bracket body first end (17) and a bracket body second end (18), said bracket body first end coupled to said bracket base, said bracket body second end extending outwardly from said bracket base and
an archwire slot (12) extending across said bracket body second end (18), said archwire slot (12) defined by an archwire slot base (19) joined to a pair of archwire slot walls (20)(21) disposed a distance apart in substantially parallel opposed relation, said archwire slot (12) having an archwire slot angle (31) relative to said bracket base (10), said archwire slot (12) configured to receive an archwire (5);
wherein said plurality of brackets (4) within said bracket combinatorial library (33) includes a plurality of preselected bracket body lengths (23) discretely occurring throughout a bracket body length range of between zero millimeters to about 5 millimeters;
wherein said plurality of brackets (4) within said bracket combinatorial library (33) includes a plurality of preselected archwire slot angles (31) discretely occurring throughout an archwire slot angle range of between 0 degrees to about 60 degrees;
wherein each one of said plurality of preselected bracket body lengths (23) discretely combines with each one of said plurality of preselected archwire slot angles (31); and
whereby the number of said plurality of brackets (4) within said bracket combinatorial library (33) associated with said dentition group (34) being equal to the product of the number of different preselected bracket body lengths (23) occurring throughout said bracket body length range times the number of different preselected archwire slot angles (31) occurring throughout said archwire slot angle range
**characterized in that**
said bracket base (10) having a bracket base mounting surface (35) with a concave or convex contour configured to conform to a corresponding convex or concave contour of a mountable tooth surface.

2. The system of claim 1, wherein said preselected body bracket lengths (23) discretely occurring throughout said bracket body length range of between zero millimeters to about 5 millimeters occur at intervals selected from the group consisting of: between about 0.25 millimeters to about 0.5 millimeters, between about 0.375 millimeters to about 0.875 millimeters, between about 0.5 millimeters to about 1.0 millimeter, and between about 0.75 millimeters to about 1.25 millimeters.

3. The system of claim 2, wherein said preselected archwire slot angles (31) discretely occurring throughout said archwire slot angle range of between 0 degrees to about 50 degrees occur at intervals selected from the group consisting of: between about 5 degrees to about 10 degrees, between about 7.5 degrees to about 12.5 degrees, between about 10 degrees to about 15 degrees, between about 12.5 degrees to about 17.5 degrees, between about 15 degrees to about 20 degrees, and between about 17.5 degrees to about 22.5 degrees.

4. The system of claim 3, wherein said dental arch (7) is divided into a dental arch configuration having four dentition groups (34).

5. The system of claim 4, wherein:
a first dentition group (50) comprises central and lateral incisors (51)(52);
a second dentition group (53) comprises cuspids (54);
a third dentition group (57) comprises first bicuspids (55), and second bicuspids (56); and
a fourth dentition group (71) comprises first and second molars (58)(59).

6. The system of claim 3, wherein said dental arch (7) is divided into a dental arch configuration having three dentition groups (34).

7. The system of claim 6, wherein:
a first dentition group (61) comprises central and lateral incisors (51)(52);
a second dentition group (62) comprises cuspids (54), first bicuspids (55), and
second bicuspids (56); and a third dentition group (72) comprises first and
second molars (58)(59).

8. The system of claim 3, wherein said dental arch is (7) divided into a dental arch configuration having two dentition groups (34).

9. The system of claim 8, wherein:
a first dentition group (74) comprises central and lateral incisors (51)(52), cuspids (54), first bicuspids (55), and second bicuspids (56); and
a second dentition group (75) comprises first and second molars (58)(59).

10. The system of claim 3, wherein said dental arch (7) is divided into a dental arch configuration having one dentition group (34) comprising central and lateral incisors (51)(52), cuspids (54), first bicuspids (55), second bicuspids (56), and first and second molars (58)(59).

11. The system of claim 3, further comprising said archwire (5) disposable in said archwire slot (12), said archwire (5) configured to engage said archwire slot (12) in a fixed configuration to generate increasing tipping force moments for one or more of said teeth (3) malocclused or misaligned in relation to mesial-distal inclination (29) with an increase in archwire slot rotation in relation to said zero degree archwire slot rotation axis (37).

12. The system of claim 3, further comprising said archwire (5) disposable in said archwire slot (12), said archwire (5) configured to engage said archwire slot (12) in a fixed configuration to generate increasing in-out force moments with an increase in bracket body length (23).

13. A method of producing a bracket system (1) according to claim 1 comprising a bracket combinatorial library (33), said method comprising:
providing a plurality of brackets (4) each interchangeably fixedly mountable to each of a plurality of teeth (3) within a dentition group (34) in a dental arch (7), each of said plurality of brackets (4) within said bracket combinatorial library (33) provided by:
configuring a bracket base (10) to have one configuration fixedly mountable to each one of said plurality of teeth (3) within said dentition group (34), said bracket base (10) having a bracket base mounting surface (35) with a concave or convex contour;
providing a bracket body (11) having a bracket body length (23) disposed between a bracket body first (17) end and a bracket body second end (18), said bracket body length (23) a preselected bracket body length (23) discretely occurring throughout a bracket body length range of between zero millimeters to about 5 millimeters;
coupling said bracket body first end (17) to said bracket base (10), said bracket body second end (18) extending outwardly from said bracket base (10);
disposing an archwire slot (12) configured to receive an archwire (5) within said bracket body second end (18) to extend across said bracket body second end (18), said archwire slot (12) defined by an archwire slot base (19) joined to a pair of archwire slot walls (20)(21) disposed a distance apart in substantially parallel opposed relation, said archwire slot (12) having an archwire slot angle (31) relative to said bracket base (10), said archwire slot angle (31) a preselected archwire slot angle (31) discretely occurring throughout an archwire slot angle range of between 0 degrees to about 60 degrees; and
discretely combining each one of said plurality of preselected bracket body lengths (23) with each one of said plurality of preselected archwire slot angles (31) to provide said bracket combinatorial library (33);
whereby said plurality of brackets (4) within said bracket combinatorial library (33) associated with said dentition group (34) being equal to a product of a number of different preselected bracket body lengths (23) occurring throughout said bracket body length range times a number of different preselected archwire slot angles (31) occurring throughout said archwire slot angle range.

## Patentansprüche

1. Bracketsystem (1), umfassend:
eine kombinatorische Bracket-Bibliothek (33), die eine Vielzahl von Brackets (4) aufweist, die jeweils austauschbar fest an jedem einer Vielzahl von Zähnen (3) innerhalb einer Zahngruppe (34) in einem Zahnbogen (7) montierbar sind, wobei jedes der Vielzahl von Brackets innerhalb der kombinatorischen Bracket-Bibliothek aufweist:
eine Bracketbasis (10), die eine Konfiguration aufweist, die an jedem der Vielzahl von Zähnen (3) innerhalb der Zahngruppe (34) fest montierbar ist; wobei die Bracketbasis (10) eine Bracketbasis-Montagefläche (35) aufweist, die zum direkten Verkleben mit den Oberflächen (8, 9) der jeweiligen Zähne (3) geeignet ist;
einen Bracketkörper (11), der eine Bracketkörperlänge (23) aufweist, die zwischen einem ersten Ende (17) des Bracketkörpers und einem zweiten Ende (18) des Bracketkörpers angeordnet ist, wobei das erste Ende des Bracketkörpers mit der Bracketbasis gekoppelt ist und das zweite Ende des Bracketkörpers sich von der Bracketbasis nach außen erstreckt; und
ein Bogendrahtschloss (12), das sich über das zweite Ende (18) des Bracketkörpers erstreckt, wobei das Bogendrahtschloss (12) durch eine Bogendrahtschlossbasis (19) definiert ist, die mit einem Paar von Bogendrahtschlosswänden (20, 21) verbunden ist, die in einem Abstand voneinander in einer im Wesentlichen parallelen, einander gegenüberliegenden Relativlage angeordnet sind, wobei das Bogendrahtschloss (12) einen Bogendrahtschlosswinkel (31) relativ zu der Bracketbasis (10) aufweist, wobei das Bogendrahtschloss (12) eingerichtet ist, um einen Bogendraht (5) aufzunehmen;
wobei die Vielzahl von Brackets (4) innerhalb der kombinatorischen Bracket-Bibliothek (33) eine Vielzahl von vorgewählten Bracketkörperlängen (23) aufweist, die diskret über einen Bracketkörperlängenbereich zwischen null Millimetern und etwa 5 Millimetern auftreten;
wobei die Vielzahl von Brackets (4) innerhalb der kombinatorischen Bracket-Bibliothek (33) eine Vielzahl von vorgewählten Bogendrahtschlosswinkeln (31) aufweist, die diskret über einen Bogendrahtschlosswinkelbereich zwischen 0 Grad und etwa 60 Grad auftreten;
wobei jede der Vielzahl von vorgewählten Bracketkörperlängen (23) sich diskret mit jedem der Vielzahl von vorgewählten Bogendrahtschlosswinkeln (31) kombiniert; und
wobei die Anzahl der Vielzahl von Brackets (4) innerhalb der der Zahngruppe (34) zugeordneten kombinatorischen Bracket-Bibliothek (33) gleich dem Produkt aus der Anzahl verschiedener vorgewählter Bracketkörperlängen (23), die in dem Bracketkörperlängenbereich auftreten, mal der Anzahl verschiedener vorgewählter Bogendrahtschlosswinkel (31), die über den gesamten Bereich der Bogendrahtschlosswinkel auftreten, ist, **dadurch gekennzeichnet, dass** die Bracketbasis (10) eine Bracketbasis-Montagefläche (35) mit einer konkaven oder konvexen Kontur aufweist, die so eingerichtet ist, dass sie mit einer entsprechenden konvexen oder konkaven Kontur einer montierbaren Zahnoberfläche übereinstimmt.

2. System nach Anspruch 1, wobei die vorgewählten Bracketkörperlängen (23), die diskret über den Bracketkörperlängenbereich zwischen null Millimetern und etwa 5 Millimetern auftreten, in Abständen auftreten, die ausgewählt sind aus der Gruppe bestehend aus: zwischen etwa 0,25 Millimetern bis etwa 0,5 Millimetern, zwischen etwa 0,375 Millimetern bis etwa 0,875 Millimetern, zwischen etwa 0,5 Millimetern bis etwa 1,0 Millimetern und zwischen etwa 0,75 Millimetern bis etwa 1,25 Millimetern.

3. System nach Anspruch 2, wobei die vorgewählten Bogendrahtschlosswinkel (31), die diskret über den gesamten Bereich der Bogendrahtschlosswinkel zwischen 0 Grad und etwa 50 Grad auftreten, in Abständen auftreten, die ausgewählt sind aus der Gruppe bestehend aus: zwischen etwa 5 Grad bis etwa 10 Grad, zwischen etwa 7,5 Grad bis etwa 12,5 Grad, zwischen etwa 10 Grad bis etwa 15 Grad, zwischen etwa 12,5 Grad bis etwa 17,5 Grad, zwischen etwa 15 Grad bis etwa 20 Grad und zwischen etwa 17,5 Grad bis etwa 22,5 Grad.

4. System nach Anspruch 3, wobei der Zahnbogen (7) in eine Zahnbogenkonfiguration mit vier Zahngruppen (34) unterteilt ist.

5. System nach Anspruch 4, wobei:
eine erste Zahngruppe (50) zentrale und laterale Schneidezähne (51, 52) umfasst;
eine zweite Zahngruppe (53) Eckzähne (54) umfasst;
eine dritte Zahngruppe (57) erste Prämolaren (55) und zweite Prämolaren (56) umfasst; und
eine vierte Zahngruppe (71) erste und zweite Molaren (58, 59) umfasst.

6. System nach Anspruch 3, wobei der Zahnbogen (7) in eine Zahnbogenkonfiguration unterteilt ist, die drei Zahngruppen (34) aufweist.

7. System nach Anspruch 6, wobei:
eine erste Zahngruppe (61) zentrale und laterale Schneidezähne (51, 52) umfasst;
eine zweite Zahngruppe (62) Eckzähne (54), erste Prämolaren (55) und zweite Prämolaren (56) umfasst; und eine dritte Zahngruppe (72) erste und zweite Molaren (58, 59) umfasst.

8. System nach Anspruch 3, wobei der Zahnbogen (7) in eine Zahnbogenkonfiguration unterteilt ist, die zwei Zahngruppen (34) aufweist.

9. System nach Anspruch 8, wobei:
eine erste Zahngruppe (74) zentrale und laterale Schneidezähne (51, 52), Eckzähne (54), erste Prämolaren (55) und zweite Prämolaren (56) umfasst; und
eine zweite Zahngruppe (75) erste und zweite Molaren (58, 59) umfasst.

10. System nach Anspruch 3, wobei der Zahnbogen (7) in eine Zahnbogenkonfiguration unterteilt ist, die eine Zahngruppe (34) aufweist, die zentrale und laterale Schneidezähne (51, 52), Eckzähne (54), erste Prämolaren (55), zweite Prämolaren (56) und erste und zweite Molaren (58, 59) umfasst.

11. System nach Anspruch 3, des Weiteren umfassend den Bogendraht (5), der in dem Bogendrahtschloss (12) anordenbar ist, wobei der Bogendraht (5) so eingerichtet ist, dass er in das Bogendrahtschloss (12) in einer festen Konfiguration eingreift, um zunehmende Kippkraftmomente für einen oder mehrere der Zähne (3) zu erzeugen, die in Bezug auf eine mesial-distale Neigung (29) mit einer Zunahme der Bogendrahtschlossrotation in Bezug auf die Null-Grad-Bogendrahtschlossrotationsachse (37) falsch okkludiert oder fehlausgerichtet sind.

12. System nach Anspruch 3, des Weiteren umfassend den Bogendraht (5), der in dem Bogendrahtschloss (12) anordenbar ist, wobei der Bogendraht (5) so eingerichtet ist, dass er in das Bogendrahtschloss (12) in einer festen Konfiguration eingreift, um mit zunehmender Länge des Bracketkörpers (23) zunehmende Innen-Außen-Kraftmomente zu erzeugen.

13. Verfahren zur Herstellung eines Bracketsystems (1) nach Anspruch 1, das eine kombinatorische Bracket-Bibliothek (33) umfasst, wobei das Verfahren umfasst:
Bereitstellen einer Vielzahl von Brackets (4), die jeweils austauschbar fest an jedem einer Vielzahl von Zähnen (3) innerhalb einer Zahngruppe (34) in einem Zahnbogen (7) montierbar sind, wobei jedes der Vielzahl von Brackets innerhalb der kombinatorischen Bracket-Bibliothek bereitgestellt wird durch:
Konfigurieren einer Bracketbasis (10) derart, dass sie eine an jedem der Vielzahl von Zähnen (3) innerhalb der Zahngruppe (34) fest montierbare Konfiguration aufweist; wobei die Bracketbasis (10) eine Bracketbasis-Montagefläche (35) mit einer konkaven oder konvexen Kontur aufweist;
Bereitstellen eines Bracketkörpers (11), der eine Bracketkörperlänge (23) aufweist, die zwischen einem ersten Ende (17) des Bracketkörpers und einem zweiten Ende (18) des Bracketkörpers angeordnet ist, wobei die Bracketkörperlänge (23) eine vorgewählte Bracketkörperlänge (23) ist, die diskret über einen Bracketkörperlängenbereich zwischen null Millimetern und etwa 5 Millimetern auftritt
Koppeln des ersten Endes (17) des Bracketkörpers an die Bracketbasis (10), wobei sich das zweite Ende (18) des Bracketkörpers von der Bracketbasis (10) nach außen erstreckt;
Anordnen eines Bogendrahtschlosses (12), das zur Aufnahme eines Bogendrahts (5) innerhalb des zweiten Endes (18) des Bracketkörpers eingerichtet ist, um sich über das zweite Ende (18) des Bracketkörpers zu erstrecken, wobei das Bogendrahtschloss (12) durch eine Bogendrahtschlossbasis (19) definiert ist, die mit einem Paar von Bogendrahtschlosswänden (20, 21) verbunden ist, die in einem Abstand voneinander in einer im Wesentlichen parallelen, einander gegenüberliegenden Relativlage angeordnet sind, wobei das Bogendrahtschloss (12) einen Bogendrahtschlosswinkel (31) relativ zu der Bracketbasis (10) aufweist, wobei der Bogendrahtschlosswinkel (31) ein vorgewählter Bogendrahtschlosswinkel (31) ist, der diskret über einen Bogendrahtschlosswinkelbereich zwischen 0 Grad bis etwa 60 Grad auftritt; und
diskretes Kombinieren jede der Vielzahl von vorgewählten Bracketkörperlängen (23) mit jedem der Vielzahl von vorgewählten Bogendrahtschlosswinkeln (31), um die kombinatorische Bracket-Bibliothek (33) bereitzustellen;
wobei die Vielzahl von Brackets (4) innerhalb der der Zahngruppe (34) zugeordneten kombinatorischen Bracket-Bibliothek (33) gleich dem Produkt aus der Anzahl verschiedener vorgewählter Bracketkörperlängen (23), die in dem Bracketkörperlängenbereich auftreten, mal der Anzahl verschiedener vorgewählter Bogendrahtschlosswinkel (31), die über den gesamten Bereich der Bogendrahtschlosswinkel auftreten, ist.

## Revendications

1. Système de bagues (1) comprenant :
un ensemble combinatoire de bagues (33) comprenant une pluralité de bagues (4) pouvant être chacune montées de manière interchangeable sur chacune d'une pluralité de dents (3) dans un groupe de dentition (34) d'une arcade dentaire (7), chacune de ladite pluralité de bagues dudit ensemble combinatoire de bagues comprenant :
une base de bague (10) ayant une configuration pouvant être montée de manière fixe sur chacune de ladite pluralité de dents (3) dans ledit groupe de dentition (34) ; ladite base de bague (10) ayant une surface de montage de base de bague (35) adaptée pour se lier directement aux surfaces (8)(9) desdites dents respectives (3) ;
un corps de bague (11) ayant une longueur de corps de bague (23) disposé entre une première extrémité de corps de bague (17) et une seconde extrémité de corps de bague (18), ladite première extrémité de corps de bague étant reliée à ladite base de bague, ladite seconde extrémité de corps de bague s'étendant vers l'extérieur depuis ladite base de bague ; et
une fente d'arc dentaire (12) qui s'étend dans ladite seconde extrémité de corps de bague (18), ladite fente d'arc dentaire (12) étant définie par une base de fente d'arc dentaire (19) jointe à une paire de parois de fente d'arc dentaire (20)(21) disposées à une distance selon une relation opposée sensiblement parallèle, ladite fente d'arc dentaire (12) ayant un angle de fente d'arc dentaire (31) par rapport à ladite base de bague (10), ladite fente d'arc dentaire (12) étant configurée pour recevoir un arc dentaire (5) ;
dans lequel ladite pluralité de bagues (4) dans ledit ensemble combinatoire de bagues (33) comprend une pluralité de longueurs de corps de bague présélectionnées (23) qui se trouvent discrètement sur une plage de longueurs de corps de bague comprise entre zéro millimètre et environ 5 millimètres ;
dans lequel ladite pluralité de bagues (4) dans ledit ensemble combinatoire de bagues (33) comprend une pluralité d'angles de fentes d'arc dentaire présélectionnés (31) qui se trouvent discrètement sur une plage d'angles de fentes d'arc dentaire comprise entre 0 degré et environ 60 degrés ;
dans lequel chacune de ladite pluralité de longueurs de corps de bague présélectionnées (23) se combine discrètement avec chacun de ladite pluralité d'angles de fentes d'arc dentaire présélectionnés (31) ; et
dans lequel le nombre de ladite pluralité de bagues (4) dans ledit ensemble combinatoire de bagues (33) associé audit groupe de dentition (34) est égal au produit du nombre de différentes longueurs de corps de bague présélectionnées (23) qui se trouvent sur ladite plage de longueurs de corps de bague et du nombre de différents angles de fentes d'arc dentaire présélectionnés (31) qui se trouvent sur ladite plage d'angles de fentes d'arc dentaire,
**caractérisé en ce que**
ladite base de bague (10) possède une surface de montage de base de bague (35) avec un contour concave ou convexe configuré pour se conformer à un contour convexe ou concave correspondant d'une surface de dent montable.

2. Système selon la revendication 1, dans lequel lesdites longueurs de corps de bague présélectionnées (23) se trouvant discrètement sur ladite plage de longueurs de corps de bague comprise entre zéro millimètre et environ 5 millimètres se trouvent à des intervalles choisis parmi le groupe consistant en : entre environ 0,25 millimètre et environ 0,5 millimètre, entre environ 0,375 millimètre et environ 0,875 millimètre, entre environ 0,5 millimètre et environ 1 millimètre, et entre environ 0,75 millimètre et environ 1,25 millimètre.

3. Système selon la revendication 2, dans lequel lesdits angles de fentes d'arc dentaire présélectionnés (31) se trouvant discrètement sur ladite plage d'angles de fentes d'arc dentaire comprise entre 0 degré et environ 50 degrés se trouvent à des intervalles choisis parmi le groupe consistant en : entre environ 5 degrés et environ 10 degrés, entre environ 7,5 degrés et environ 12,5 degrés, entre environ 10 degrés et environ 15 degrés, entre environ 12,5 degrés et environ 17,5 degrés, entre environ 15 degrés et environ 20 degrés, et entre environ 17,5 degrés et environ 22,5 degrés.

4. Système selon la revendication 3, dans lequel ladite arcade dentaire (7) est divisée en une configuration d'arcade dentaire ayant quatre groupes de dentition (34).

5. Système selon la revendication 4, dans lequel :
un premier groupe de dentition (50) comprend les incisives centrale et latérale (51)(52) ;
un second groupe de dentition (53) comprend les canines (54) ;
un troisième groupe de dentition (57) comprend les premières prémolaires (55), et les secondes prémolaires (56) ; et
un quatrième groupe de dentition (71) comprend les premières et secondes molaires (58)(59).

6. Système selon la revendication 3, dans lequel ladite arcade dentaire (7) est divisée en une configuration d'arcade dentaire ayant trois groupes de dentition (34).

7. Système selon la revendication 6, dans lequel :
un premier groupe de dentition (61) comprend les incisives centrale et latérale (51)(52) ;
un second groupe de dentition (62) comprend les canines (54), les premières prémolaires (55), et les secondes prémolaires (56) ; et un troisième groupe de dentition (72) comprend les premières et secondes molaires (58)(59).

8. Système selon la revendication 3, dans lequel ladite arcade dentaire (7) est divisée en une configuration d'arcade dentaire ayant deux groupes de dentition (34).

9. Système selon la revendication 8, dans lequel :
un premier groupe de dentition (74) comprend les incisives centrale et latérale (51)(52), les canines (54), les premières molaires (55), et les secondes molaires (56) ; et un second groupe de dentition (75) comprend les premières et secondes molaires (58)(59).

10. Système selon la revendication 3, dans lequel ladite arcade dentaire (7) est divisée en une configuration d'arcade dentaire ayant un groupe de dentition (34) comprenant les incisives centrale et latérale (52)(52), les canines (54), les premières prémolaires (55), les secondes prémolaires (56), et les premières et secondes molaires (58)(59).

11. Système selon la revendication 3, comprenant en outre ledit arc dentaire (5) qui peut être placé dans ladite fente d'arc dentaire (12), ledit arc dentaire (5) étant configuré pour engager ladite fente d'arc dentaire (12) dans une configuration fixe afin de générer des moments de force de bascule accrue pour une ou plusieurs desdites dents (3) en malocclusion ou mal alignées par rapport à l'inclinaison médiane/distale (29) en cas d'augmentation de la rotation de la fente d'arc dentaire par rapport audit axe de rotation de fente d'arc dentaire à zéro degré (37).

12. Système selon la revendication 3, comprenant en outre ledit arc dentaire (5) qui peut être placé dans ladite fente d'arc dentaire (12), ledit arc dentaire (5) étant configuré pour engager ladite fente d'arc dentaire (12) dans une configuration fixe afin de générer des moments de force d'entrée/de sortie accrue en cas d'augmentation de la longueur du corps de bague (23).

13. Procédé de fabrication d'un système de bagues (1) selon la revendication 1 comprenant un ensemble combinatoire de bagues (33), ledit procédé comprenant :
la fourniture d'une pluralité de bagues (4) qui peuvent être chacune montées de manière interchangeable sur chacune d'une pluralité de dents (3) dans un groupe de dentition (34) d'une arcade dentaire (7), chacune de ladite pluralité de bagues (4) dudit ensemble combinatoire de bagues (33) étant prévue en :
configurant une base de bague (10) afin d'avoir une configuration pouvant être montée de manière fixe sur chacune de ladite pluralité de dents (3) dans ledit groupe de dentition (34), ladite base de bague (10) ayant une surface de montage de base de bague (35) avec un contour concave ou convexe ;
fournissant un corps de bague (11) ayant une longueur de corps de bague (23) disposé entre une première extrémité de corps de bague (17) et une seconde extrémité de corps de bague (18), ladite longueur de corps de bague (23) étant une longueur de corps de bague présélectionnée (23) se trouvant discrètement sur une plage de longueurs de corps de bague comprise entre zéro millimètre et environ 5 millimètres ;
reliant ladite première extrémité de corps de bague (17) à ladite base de bague (10), ladite seconde extrémité de corps de bague (18) s'étendant vers l'extérieur depuis ladite base de bague (10) ;
plaçant une fente d'arc dentaire (12) configurée pour recevoir un arc dentaire (5) dans ladite seconde extrémité de corps de base (18) afin de s'étendre dans ladite seconde extrémité de corps de bague (18), ladite fente d'arc dentaire (12) étant définie par une base de fente d'arc dentaire (19) jointe à une paire de parois de fente d'arc dentaire (20)(21) disposées à une distance selon une relation opposée sensiblement parallèle, ladite fente d'arc dentaire (12) ayant un angle de fente d'arc dentaire (31) par rapport à ladite base de bague (10), ledit angle d'arc dentaire (31) étant un angle de fente d'arc dentaire présélectionné (31) qui se trouve discrètement sur une plage d'angles de fentes d'arc dentaire comprise entre 0 degré et environ 60 degrés ; et
combinant de façon discrète chacune de ladite pluralité de longueurs de corps de bague présélectionnées (23) avec chacun de ladite pluralité d'angles de fentes d'arc dentaire présélectionnés (31) afin d'offrir ledit ensemble combinatoire de bagues (33) ;
dans lequel ladite pluralité de bagues (4) dans ledit ensemble combinatoire de bagues (33) associé audit groupe de dentition (34) est égale à un produit d'un nombre de différentes longueurs de corps de bague présélectionnées (23) se trouvant sur ladite plage de longueurs de corps de bague et d'un nombre de différents angles de fentes d'arc dentaire présélectionnés (31) qui se trouvent sur ladite plage d'angles de fentes d'arc dentaire.
